# EUROPÄISCHE PATENTSCHRIFT

(11) **EP 0 783 918 B1**
(45) Veröffentlichungstag und Bekanntmachung des Hinweises auf die Patenterteilung: **16.01.2002**
(21) Anmeldenummer: 96103917.9
(22) Anmeldetag: 13.03.1996
(51) Int. Cl.: B01D 53/94, B01D 53/86, F01N 3/20

(54) **Verfahren zur Verringerung von Stickoxiden in Abgasen von Dieselmotoren**
Process for nitrogen oxides reduction in diesel engine exhaust gas
Procédé pour la réduction des oxydes d'azote dans les gaz d'échappement de moteurs diesel

(30) Priorität: 09.01.1996 DE 19600558
(43) Veröffentlichungstag der Anmeldung: 16.07.1997
(73) Patentinhaber: DaimlerChrysler AG, 70567 Stuttgart (DE)
(72) Erfinder: Krutzsch, Bernd, Dr., 73770 Denkendorf (DE); Goerigk, Christian, 71397 Leutenbach (DE); Kurze, Stefan, 70376 Stuttgart (DE); Wenninger, Günter, 70599 Stuttgart (DE); Boegner, Walter, Dipl.-Ing., 71686 Remseck (DE); Wirbeleit, Friedrich, Dr.-Ing., 73733 Esslingen (DE)

(56) Entgegenhaltungen:
- EP-A- 0 441 401
- EP-A- 0 537 968
- US-A- 5 272 871
- US-A- 5 474 745
- PATENT ABSTRACTS OF JAPAN vol. 002, no. 072 (C-014), 31.Mai 1978 & JP 53 026270 A (KOBE STEEL LTD), 10.März 1978,
- PATENT ABSTRACTS OF JAPAN vol. 012, no. 292 (M-729), 10.August 1988 & JP 63 068714 A (MAZDA MOTOR CORP), 28.März 1988,

## Beschreibung

Die Erfindung betrifft ein Verfahren zur Verringerung des Stickoxidgehalts in sauerstoffhaltigen Abgasen von Brennkraftmaschinen mit Kraftstoffeinspritzung, gemäß dem Oberbegriff des Patentanspruchs 1.

Aus der EP 537 968 A1 ist ein solches Verfahren bekannt, wobei die Stickoxide mit Hilfe von Wasserstoff als Reduktionsmittel an einem Platin/Zeolith-Katalysator umgewandelt werden. Die katalytische NOx-Verringerung an platinhaltigen Katalysatoren weist jedoch den Nachteil auf, daß eine ausreichende Konversionsrate nur in einem relativ schmalen Temperaturfenster gewährleistet wird.

Weiterhin ist es bekannt, Stickoxide mit Hilfe von Kohlenwasserstoffen als Reduktionsmittel mit Hilfe eines sogenannten DENOX-Katalysators zu reduzieren. Solche Verfahren weisen ihr Umsatzmaximum bei höheren Temperaturen auf. Jedoch wurde bisher in dem vom Gesetzgeber geforderten europäischen Fahrzyklus selbst bei Wahl optimaler Bedingungen hinsichtlich Reduktionsmittel und DENOX-Katalysator eine NOx-Verringerung von nur 10-15% erreicht. Zur Gewährleistung zukünftiger Abgasgrenzwerte für Kraftfahrzeuge ist dies jedoch nicht ausreichend. Außerdem tritt bei modernen Dieselmotoren das Problem auf, daß im Abgas Kohlenwasserstoffe nicht mehr in ausreichendem Maße enthalten sind.

Es ist die Aufgabe der Erfindung, ein Verfahren zur Verringerung des Stickoxidgehalts in sauerstoffhaltigen Abgasen derart zu verbessern, daß über einen weiten Temperaturbereich einschließlich der Temperaturen ab ca. 100° C eine erhöhte Umwandlungsrate gewährleistet wird.

Die Aufgabe wird erfindungsgemäß durch die kennzeichnenden Merkmale des Patentanspruchs 1 gelöst.

Die Erfindung beruht auf der experimentell bestätigten Erkenntnis, daß zur Gewährleistung einer ausreichenden NOx-Verringerung sowohl Wasserstoff als auch Kohlenwasserstoffe in einem in Abhängigkeit von Betriebsbedingungen vorgegebenen Verhältnis im Abgas enthalten sein müssen. Durch die geeignete Kombination der beiden Reduktionsmittel ergibt sich ein Synergieeffekt, wobei der Wasserstoff aktivierend auf den Ablauf der NOx-Reduktion wirkt. Hierbei wird durch den Wasserstoff die Selektivität der HC-NOx-Reaktion erhöht und gleichzeitig die Selektivität für die Produktion von Lachgas (N₂O) reduziert.

Bei den durchgeführten Versuchen an platinhaltigen Katalysatoren wurde nachgewiesen, daß bei Anwesenheit einer Mindestkonzentration an Kohlenwasserstoffen im Abgas neben dem für Wasserstoff charakteristischen Umsatzmaximum bei ungefähr 100° C ein zweites Umsatzmaximum zwischen 250° und 350° C zu beobachten ist. Außerdem wurden auch bei sehr niedrigen Kohlenwasserstoff/NOx-Verhältnissen, bei denen bisher nur geringe NOx-Umsätze beobachtet werden konnten, bei Anwesenheit geringer Wasserstoffmengen relativ hohe NOx-Konversionsraten erreicht.

Entscheidend für eine ausreichende NOx-Verringerung an einem DENOX-Katalysator ist somit das richtige Verhältnis von Wasserstoff zu Kohlenwasserstoffen im Abgas in Abhängigkeit von der Katalysatortemperatur. Daher erfolgt die Dosierung der beiden Reduktionsmittel vorzugsweise in Abhängigkeit von der Katalysatortemperatur und/oder der Motorlast und/oder der Motordrehzahl, vorzugsweise kennfeldgesteuert. Die der Dosierung zugrundeliegende physikalische Größe ist der NOx-Massenstrom.

Für die Bereitstellung von Kohlenwasserstoffen sind viele Verfahren möglich. Besonders vorteilhaft bei Motoren, die mit einer sogenannten Common-Rail-Hochdruckeinspritzanlage ausgerüstet sind, ist die Möglichkeit, durch eine gezielte Nacheinspritzung einer vorgegebenen Kraftstoffmenge in die Brennkraftmaschine einen gewünschten Anteil an Kohlenwasserstoffen im Abgas einzustellen. Bei solchen Motoren ist es zusätzlich durch eine frühe Nacheinspritzung von Kraftstoff möglich, den benötigten Wasserstoff zu erzeugen.

Weitere Vorteile und Ausgestaltungen gehen aus den Unteransprüchen und der Beschreibung hervor. Die Erfindung ist nachstehend anhand einer Zeichnung näher beschrieben, wobei
- Fig. 1: eine Prinzipdarstellung einer Vorrichtung zur Durchführung des erfindungsgemäßen Verfahrens,
- Fig. 2: eine Ausgestaltung der Vorrichtung nach Fig. 1,
- Fig. 3: ein Schaubild für die NOx-Konversionsraten in Laborversuchen mit synthetischem Abgas und mit Wasserstoff als Reduktionsmittel,
- Fig. 4: ein weiteres Schaubild für die NOx-Konversionsraten in einem Versuch auf einem Motorenprüfstand mit Dieselabgas bei Verwendung von Wasserstoff und Kohlenwasserstoffen als Reduktionsmittel an einem neuen oder gereinigten Katalysator und
- Fig. 5: das Schaubild gemäß Fig. 4 für einen stabilisierten Katalysator zeigt.

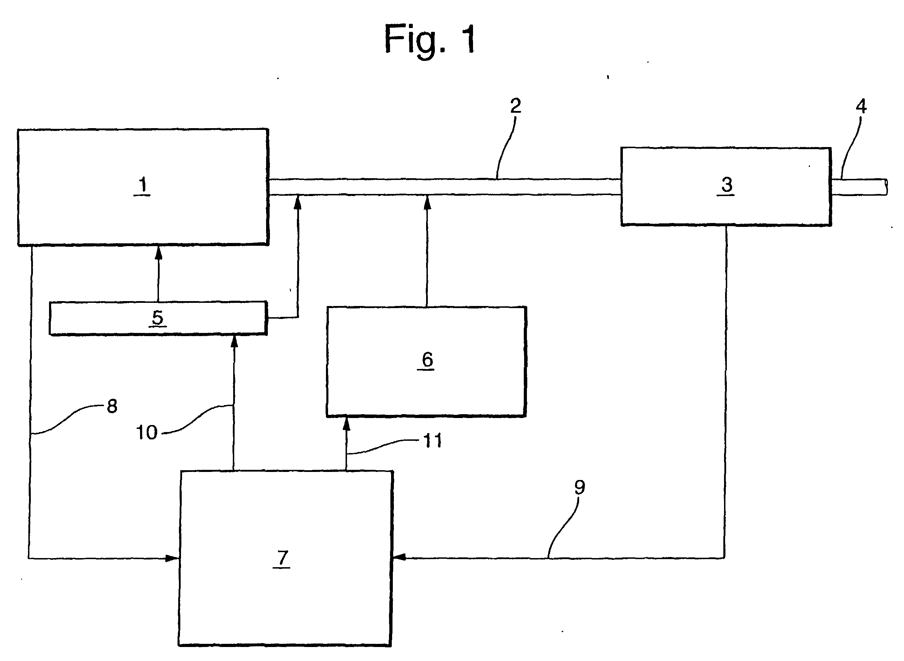

Gemäß Fig. 1 wird das von einer insgesamt mit 1 gekennzeichneten Brennkraftmaschine erzeugte Abgas über eine Abgasleitung 2 einem sogenannten DENOX-Katalysator 3 zugeführt. Das gereinigte Abgas wird anschließend über eine weitere Leitung 4 an die Umwelt abgegeben. Weiterhin ist eine Vorrichtung zur Bereitstellung von Kohlenwasserstoffen, im folgenden kurz als HC-Generator 5 bezeichnet, und eine Vorrichtung zur Bereitstellung von Wasserstoff, im folgenden als H₂-Generator 6 bezeichnet, vorgesehen. Die Kohlenwasserstoffe und/oder der Wasserstoff wird stromauf des DENOX-Katalysators 3 als Reduktionsmittel in die Abgasleitung 2 eingeleitet.

Als H₂-Generator 6 kann eine beliebige Vorrichtung zur Erzeugung oder auch zur Speicherung von Wasserstoff vorgesehen werden. Insbesondere für Anwendungen in Kraftfahrzeugen kommt hierfür die Wasserelektrolyse, die Spaltgaserzeugung oder auch die Methanolreformierung in Frage.

Ein bevorzugtes Ausführungsbeispiel bezieht sich auf Kraftfahrzeug-Dieselmotoren mit einem sogenannten Common-Rail-System, bei dem der Kraftstoff zu vorgegebenen Zeitpunkten und in vorgegebenen Mengen unter Hochdruck in die Brennkraftmaschine 1 eingespritzt wird. Selbstverständlich kann aber auch jedes andere Einspritzsystem verwendet werden, wobei jedoch eine variable Steuerung der Einspritzzeiten und -mengen gewährleistet sein muß. Insbesondere bei solchen Dieselmotoren 1 mit Common-Rail-Einspritzanlage ist im Abgas üblicherweise nur noch ein sehr geringer Anteil an Kohlenwasserstoffen vorhanden. Erfindungsgemäß werden bei diesen Dieselmotoren 1 die im Abgas benötigten Kohlenwasserstoffe durch eine gezielte Nacheinspritzung von Kraftstoff erzeugt. Nacheinspritzung bedeutet in diesem Zusammenhang, daß die Einspritzung zeitlich versetzt und zusätzlich zur normalen, für den ordnungsgemäßen Betrieb der Brennkraftmaschine 1 ermittelten Kraftstoffmengen erfolgt. Als HC-Generator 5 dient in diesem Falle also das Common-Rail-Einspritzsystem. Bei solchen Motoren mit Common-Rail-Einspritzsystemen ist es weiterhin möglich, durch eine frühzeitige Nacheinspritzung von Kraftstoff den Restanteil von Wasserstoff im Abgas zu erhöhen. Ein geeigneter Zeitpunkt für die frühzeitige Nacheinspritzung liegt entweder so spät, daß die Verbrennung abgeschlossen, das heißt der Kraftstoff der Haupteinspritzung vollständig umgesetzt ist, und so früh, daß das thermische Potential im Brennraum ausreicht, um aus dem nacheingespritzten Kraftstoff eine ausreichende Menge an Wasserstoff durch thermisches Cracken freizusetzen oder etwas früher, so daß die Crack-Produkte bei noch nicht abgeschlossener Verbrennung positiv beeinflußt werden können, so daß die NOx-Konversion weiter verbessert werden kann.

Zur Dosierung der Reduktionsmittel Wasserstoff und/oder Kohlenwasserstoff ist ein Steuergerät 7 vorgesehen. Diesem wird über Meßeingänge 8, 9 die Betriebsparameter der Brennkraftmaschine 1 und die Temperatur des DENOX-Katalysators 3 als Eingangsgrößen zugeführt. Im Steuergerät 7 werden dann anhand dieser Betriebsparameter Steuer- oder Regelsignale für die Reduktionsmittelzufuhr erzeugt und über Steuerleitungen 10, 11 dem HC-Generator 5 und dem H₂-Generator 6 zugeführt.

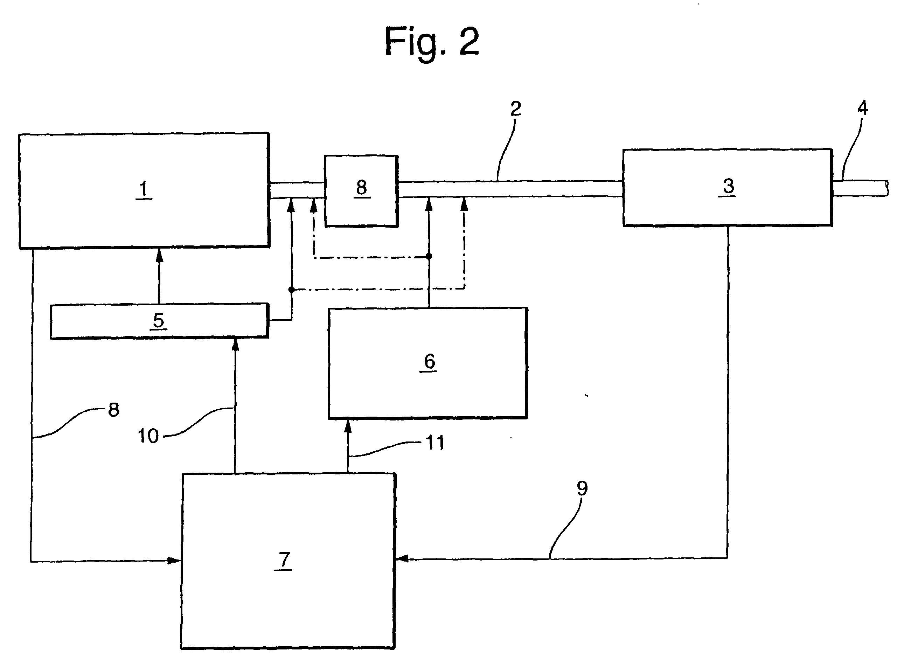

Eine Ausgestaltung der Anordnung aus Fig. 1 ist in Fig. 2 dargestellt, wobei übereinstimmende Merkmale durch identische Bezugszeichen gekennzeichnet sind. Im Unterschied zu Fig. 1 ist in der Abgasleitung ein zusätzlicher Katalysator 8 vorgesehen. Durch diesen zweiten oder gegebenenfalls weitere Katalysatoren 8 kann die Flexibilität bei der Dosierung erhöht werden. Der zweite Katalysator 8 ist motornah angeordnet und wird daher bei erhöhten Temperaturen betrieben, während der erste, stromab des zweiten Katalysators 8 angeordnete Katalysator 3 bei geringeren Temperaturen arbeitet. In einer bevorzugten Ausführungsform werden die Kohlenwasserstoffe stromauf des zweiten Katalysators 8 und der Wasserstoff zwischen dem ersten und zweiten Katalysator 3, 8 in die Abgasleitung 2 eingeleitet. Der zweite Katalysator 8 wird hierbei derart ausgeführt, daß er bei tiefen Temperaturen Kohlenwasserstoffe zwischenspeichern kann. Dies ist insbesondere während der Kaltstartphase vorteilhaft, da bei den tiefen Temperaturen keine ausreichende Reduzierung der Stickoxide am Katalysator 8 gewährleistet ist. Bei höheren Temperaturen werden diese Kohlenwasserstoffe dann wieder freigesetzt und dabei am Katalysator 8 reduziert. Durch die Zugabe des Wasserstoffs stromauf des ersten Katalysators 3 wird gewährleistet, daß überschüssige Kohlenwasserstoffe am ersten Katalysator 3 umgesetzt und somit nicht an die Umwelt abgegeben werden. Neben der hier beschriebenen Anordnung sind jedoch auch weitere Konfigurationen mit mehr als zwei Katalysatoren möglich. Außerdem kann der Wasserstoff und/oder die Kohlenwasserstoffe stromauf und/oder stromab des zweiten Katalysators 8 zugegeben werden, was in Fig. 2 durch gestrichelte Linien dargestellt ist. Bei Verwendung eines Common-Rail-Systems als Reduktionsmittelgenerator 5, 6 erfolgt die Zugabe des Reduktionsmittels jedoch direkt in der Brennkraftmaschine 1 und damit stromauf des zweiten Katalysators 8.

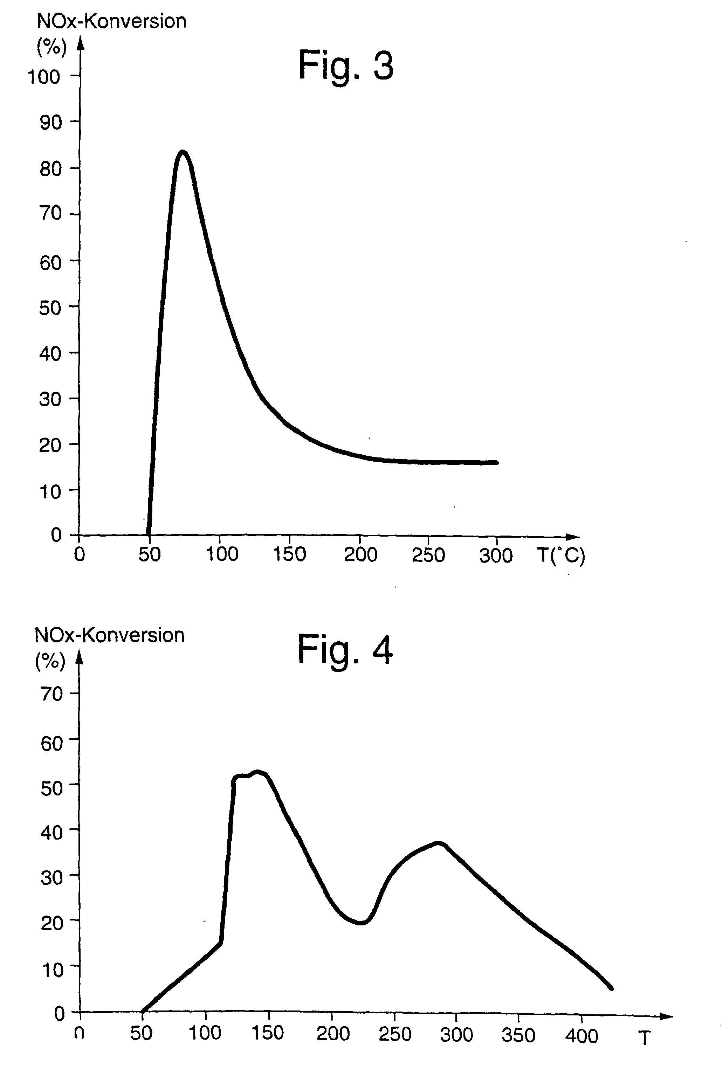

Die Dosierung der Reduktionsmittel erfolgt derart, daß in einem ersten Betriebsbereich der Brennkraftmaschine 1 ausschließlich Wasserstoff, in einem zweiten Betriebsbereich sowohl Wasserstoff als auch Kohlenwasserstoffe und in einem dritten Betriebsbereich ausschließlich Kohlenwasserstoffe zum Abgas zugegeben wird. Die Betriebsbereiche werden vorzugsweise durch unterschiedliche Katalysatortemperaturen gekennzeichnet. Bei niederen Katalysatortemperaturen wird ausschließlich Wasserstoff zum Abgas zugegeben. Dies liegt darin bedingt, daß bei den platinhaltigen DENOX-Katalysatoren 3, die üblicherweise Verwendung finden, bei Zugabe von Wasserstoff ein relativ schmales Fenster mit günstiger NOx-Konversionsrate im unteren Temperaturbereich zu beobachten ist. Der prinzipielle Verlauf einer solchen NOx-Konversionskurve mit Wasserstoff als Reduktionsmittel, aufgetragen über die Katalysatortemperatur, zeigt Fig. 3. Zu erkennen ist ein Temperaturfenster mit maximaler NOx-Konversionsrate zwischen 50° und 150° C. Bei Temperaturen oberhalb von 150° C ist die NOx-Konversionsrate jedoch nicht mehr zufriedenstellend.

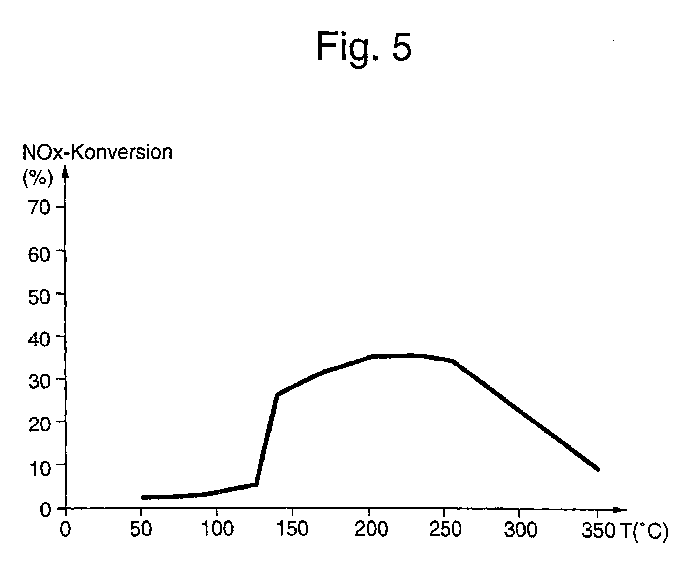

Fig. 4 zeigt wiederum den prinzipielle Verlauf einer solchen NOx-Konversionskurve an einem platinhaltigen DENOX-Katalysator 3, aufgetragen über die Katalysatortemperatur, wobei hier eine Mischung aus Wasserstoff und Kohlenwasserstoffen als Reduktionsmittel eingesetzt wurde. Anhand dieser Meßkurve ist deutlich zu erkennen, daß im Vergleich zu Fig. 3 die NOx-Konversionsrate im unteren Temperaturbereich zwar abnimmt, daß sich im mittleren und höheren Temperaturbereich jedoch eine deutlich höhere NOx-Konversionsrate einstellt. Durch eine geeignete Dosierung von Wasserstoff und Kohlenwasserstoffen ist es somit möglich, für jeden Temperaturbereich die NOx-Konversionsrate zu optimieren. Außerdem wird durch die Zugabe von Wasserstoff der Durchbruch von nicht am Katalysator umgesetzten Kohlenwasserstoffen vermieden. Fig. 5 zeigt schließlich den Verlauf der NOx-Konversionsrate entsprechend Fig. 4, jedoch für einen stabilisierten Katalysator, das heißt nach längerer Betriebsdauer. In diesem Fall verschwinden zwar die ausgeprägten Maxima, jedoch bleibt insgesamt die verbesserte NOx-Konversionsrate über den gesamten Temperaturbereich erhalten.

Die Ermittlung der gewünschten Menge des jeweiligen Reduktionsmittels erfolgt im Steuergerät 7. Vorzugsweise in direkter Abhängigkeit von der Katalysatortemperatur werden hier die benötigten Mengen an Wasserstoff beziehungsweise Kohlenwasserstoffen ermittelt, wobei die zugeführte Wasserstoffmenge mit zunehmender Katalysatortemperatur abnimmt und die Kohlenwasserstoffmenge entsprechend zunimmt. Eine kennfeldgesteuerte Zudosierung der Reduktionsmittel ist ebenfalls möglich. Schließlich kann als Eingangsgröße für die Dosierung anstelle der Katalysatortemperatur auch die Motorlast oder andere, die Katalysatortemperatur direkt oder indirekt beeinflussende Betriebsparameter verwendet werden. Die ermittelten Werte für die Reduktionsmittel werden über die Steuerleitungen 10, 11 vom Steuergerät 7 an den HC- beziehungsweise Wasserstoffgenerator 5, 6 übertragen. In diesen Generatoren 5, 6 wird dann die Erzeugung und/oder die Dosierung der Reduktionsmittel entsprechend diesen Vorgaben eingestellt.

## Patentansprüche

1. Verfahren zur Verringerung des Stickoxidgehalts in sauerstoffhaltigen Abgasen von Brennkraftmaschinen mit Kraftstoffeinspritzung, bei dem die Stickoxide mit Hilfe eines in Abhängigkeit von Betriebsparametern zum Abgas zudosierten Reduktionsmittels an einem platinhaltigen Katalysator reduziert werden,wobei als Reduktionsmittel Wasserstoff und Kohlenwasserstoff verwendet wird,
**dadurch gekennzeichnet,**
**daß** in einem ersten Betriebsbereich der Brennkraftmaschine (1) nur Wasserstoff, in einem zweiten Betriebsbereich sowohl Wasserstoff als auch Kohlenwasserstoff und in einem dritten Betriebsbereich nur Kohlenwasserstoff stromauf des Katalysators (3) zum Abgas zugeführt wird, wobei die Kohlenwasserstoffe durch eine Nacheinspritzung von Kraftstoff in die Brennkraftmaschine erzeugt werden.

2. Verfahren nach Anspruch 1,
**dadurch gekennzeichnet,**
**daß** die Reduktionsmittel in Abhängigkeit von der Katalysatortemperatur und/oder der Motorlast zudosiert werden, wobei die Wasserstoffmenge beziehungsweise Kohlenwasserstoffmenge mit zunehmender Katalysatortemperatur und/oder Motorlast reduziert beziehungsweise erhöht wird.

3. Verfahren nach Anspruch 1,
**dadurch gekennzeichnet,**
**daß** die Zudosierung der Reduktionsmittel kennfeldgesteuert erfolgt.

4. Verfahren nach Anspruch 1,
**dadurch gekennzeichnet,**
**daß** die Kohlenwasserstoffe durch eine Nacheinspritzung von Kraftstoff in die Brennkraftmaschine (1) mit Hilfe eines Common-Rail-Systems erzeugt werden.

5. Verfahren nach Anspruch 1,
**dadurch gekennzeichnet,**
**daß** der Wasserstoff durch eine frühzeitige Nacheinspritzung von Kraftstoff in die Brennkraftmaschine (1) mit Hilfe eines Common-Rail-Systems erzeugt wird.

6. Verfahren nach Anspruch 1,
**dadurch gekennzeichnet,**
**daß** die Kohlenwasserstoffe beim Kaltstart durch einen zusätzlichen, motornahen Katalysator (8) zwischengespeichert werden.

## Claims

1. Process for reducing the nitrogen oxide content in exhaust gases, from fuel injection internal combustion engines, containing oxygen, in which the nitrogen oxides are reduced, on a platiniferous catalyzer, with the aid of a reducing agent added to the exhaust gas in accordance with parameters relating to use of a given vehicle, whereby hydrogen and hydrocarbon are used as a reducing agent,
**characterized in that**,
in a first operational field of the internal combustion engine (1), only hydrogen is supplied to the exhaust gas upstream of the catalyzer (3), in a second operational field both hydrogen and hydrocarbon are supplied to the exhaust gas upstream of the catalyzer (3) and, for a third operational field, only hydrocarbon is supplied to the exhaust gas upstream of the catalyzer (3), whereby the hydrocarbons are produced by reinjection of fuel into the internal combustion engine.

2. Process in accordance with claim 1,
**characterized in that**
the reducing agents are added in accordance with the temperature of the catalyzer and/or of the engine load, whereby the quantities of hydrogen and of hydrocarbon respectively are reduced and increased respectively with increasing catalyzer temperature and/or engine load.

3. Process in accordance with claim 1,
**characterized in that**
the addition of the reducing agents is controlled on the basis of a performance curve.

4. Process in accordance with claim 1,
**characterized in that**
the hydrocarbons are produced, with the aid of a common-rail system, through a reinjection of fuel into the internal combustion engine.

5. Process in accordance with claim 1,
**characterized in that**
the hydrocarbon is produced, with the aid of a common-rail system, through the early reinjection of fuel into the internal combustion engine (1).

6. Process in accordance with claim 1,
**characterized in that**,
for a cold start, the hydrocarbons are temporarily stored by an additional catalyzer (8) near to the engine.

## Revendications

1. Procédé de réduction de la quantité d'oxyde d'azote dans les gaz d'échappement contenant de l'oxygène de moteurs à combustion interne, la quantité d'oxyde d'azote étant réduite sur un catalyseur contenant du platine au moyen d'un agent réducteur ajouté d'une manière dosée au gaz d'échappement en fonction des paramètres de fonctionnement, **caractérisé en ce qu'**on fournit au gaz d'échappement en amont du catalyseur (3) dans un premier domaine de fonctionnement du moteur à combustion interne seulement de l'hydrogène, dans un deuxième domaine de fonctionnement de l'hydrogène et des hydrocarbures et dans un troisième domaine de fonctionnement seulement des hydrocarbures, les hydrocarbures étant générés dans le moteur à combustion interne par une post-injection de carburant

2. Procédé selon la revendication 1, **caractérisé en ce que** l'agent réducteur est ajouté d'une manière quantifiée en fonction de la température du catalyseur et/ou de la charge du moteur, la quantité d'hydrogène des agents réducteurs, respectivement la quantité des hydrocarbures étant réduite, respectivement augmentée, avec la température du catalyseur et/ou la charge du moteur croissantes.

3. Procédé selon la revendication 1, **caractérisé en ce que** le dosage de l'agent de réduction a lieu par commande par diagramme caractéristique.

4. Procédé selon la revendication 1, **caractérisé en ce que** les hydrocarbures sont générés par une post-injection de carburant dans le moteur à combustion interne (1) à l'aide d'un système rail commun.

5. Procédé selon la revendication 1, **caractérisé en ce que** l'hydrogène est généré par une post-injection précoce de carburant dans le moteur à combustion interne (1) à l'aide d'un système rail commun.

6. Procédé selon la revendication 1, **caractérisé en ce que** les hydrocarbures sont stockés de manière intermédiaire dans le cas d'un départ à froid au moyen d'un catalyseur (8) additionnel proche du moteur.
